# EUROPÄISCHE PATENTSCHRIFT

(11) **EP 3 191 692 B1**
(45) Veröffentlichungstag und Bekanntmachung des Hinweises auf die Patenterteilung: **17.02.2021**
(21) Anmeldenummer: 15798034.3
(22) Anmeldetag: 19.11.2015
(51) Int. Cl.: F01D 9/02, F04D 29/54, F23R 3/04

(54) **DIFFUSOR EINER THERMISCHEN ENERGIEMASCHINE SOWIE THERMISCHE ENERGIEMASCHINE**
DIFFUSER OF A THERMAL ENERGY MACHINE AND THERMAL ENERGY MACHINE
DIFFUSEUR D'UNE MACHINE À ÉNERGIE THERMIQUE AINSI QUE MACHINE À ÉNERGIE THERMIQUE

(30) Priorität: 20.11.2014 EP 14194073
(43) Veröffentlichungstag der Anmeldung: 19.07.2017
(73) Patentinhaber: Siemens Energy Global GmbH & Co. KG, 81739 München (DE)
(72) Erfinder: FUCHS, Florian, 12059 Berlin (DE); HECKLAU, Martin, 10829 Berlin (DE); HERZOG, Nils, 10717 Berlin (DE); MAVROMMATIS, Philippos Theodoros, 12045 Berlin (DE); MUTKE, Stefan, 10961 Berlin (DE); MÜHL, Julia, 10439 Berlin (DE); PRUSS, Matthias, 10318 Berlin-Lichtenberg (DE); RECKERT, Rafael, 13127 Berlin (DE); SPEISER, Julian, 12435 Berlin (DE); WOHLTAT, Rene, 14471 Potsdam (DE)
(86) Internationale Anmeldenummer: PCT/EP2015/077051
(87) Internationale Veröffentlichungsnummer: WO 2016/079221

(56) Entgegenhaltungen:
- GB-A- 657 366
- US-A- 4 718 819
- US-A1- 2011 194 931

## Beschreibung

Die Erfindung betrifft einen Diffusor einer thermischen Energiemaschine, insbesondere einer Gasturbine, mit einem Diffusoreintritt, mit einem Diffusoraustritt und mit einer Vielzahl an Luftleitelementen, bei welchem ein Luftmassenstrom durch den Diffusoreintritt hindurch in den Diffusor hinein gelangt, und bei welchem der in den Diffusor gelangte Luftmassenstrom durch den Diffusoraustritt wieder aus dem Diffusor hinaus gelangt und hierbei mittels der Luftleitelemente als eine Vielzahl an Luftmassenpartialströmen abströmt.

Die Erfindung betrifft des Weiteren eine thermische Energiemaschine, insbesondere eine Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern, bei welcher ein durch ein Gehäuse der thermischen Energiemaschine ausgestalteter Diffusoraustrittsbereich radial in zu den Silo-Brennkammern hin führenden Zuströmkanäle derart hinein mündet, dass der aus dem Diffusor austretende Luftmassenstrom mittels des Diffusoraustrittsbereichs in die Zuströmkanäle abströmen kann.

Gattungsgemäße Diffusoren speziell stromab eines Verdichters einer Turbine sind aus dem Stand der Technik hinlänglich bekannt. Die aerodynamischen Eigenschaften dieser Diffusoren werden im Wesentlichen durch die Konturen von Innen- und Außenschale des Diffusors und durch Luftleitbleche an einem Diffusoraustritt, aber auch insbesondere durch die Leitschaufelreihe der letzten Verdichterstufe eines stromab angeordneten Verdichters beeinflusst.

Durch eine im Wesentlichen radiale Strömungsrichtung des Luftmassenstroms wird unter anderem eine Sekundärströmung mit einer Strömungskomponente in radialer Richtung induziert, welche zu einer kritischen Verblockung des Luftmassenstroms innerhalb des Diffusors und damit auch zu erhöhten Strömungsverlusten bezüglich des Luftmassenstroms führen kann. Ferner kann es zu partiellen Strömungsablösungen kommen, welche zu einer empfindlichen Reduzierung der Verzögerung des Luftmassenstroms am Diffusor und insofern auch zu einem geringeren statischen Druck am Diffusoraustritt führen können.

Weiter ist es aus der EP 0 628 728 A1 bekannt, einen so genannten Split-Diffusor zwischen dem Verdichter und einer Ringbrennkammer einer Gasturbine anzuordnen, um die verdichtete Luft einem Brennkammerplenum verlustarm zuzuführen. Dabei sind im Split-Diffusor ausgangsseitig Entdrallschaufeln mit identischen Abströmprofilen angeordnet, wodurch einzelne Luftströme mit gleichem Drall abströmen. Nach der EP 0 651 207 A1 kann die Segmentierung der Abströmung in Umfangsrichtung auch durch individuelle Rechteck-Kanäle erfolgen, deren jeweiligen Austrittsöffnungen auf unterschiedlichen Radien liegen. Gemäß der FR 1 037 610 können Entdrallschaufeln auch diffusoreingangsseitig vorgesehen sein.

Insgesamt eignen sich derartige Diffusoren jedoch nur bedingt zur Verwendung in einer Gasturbine mit Silo-Brennkammern.

Darüber hinaus offenbart die US 2007/0271923 A1 eine Gasturbine, bei der zur Reduzierung der Strömungsverluste zwischen Diffusorausgang und Brennkammereingang Leitelemente vorgesehen sind. Deren Befestigung erscheint jedoch recht aufwändig und auch aerodynamisch verlustbehaftet zu sein US 2011/194931 A1 offenbart die technischen Merkmale vom Oberbegriff vom unabhängigen Anspruch 1.

Es ist Aufgabe der Erfindung, insbesondere die vorstehend genannten Nachteile zu überwinden und zudem die aerodynamische Effizienz von gattungsgemäßen Diffusoren zu steigern.

Die Aufgabe wird von einem Diffusor einer thermischen Energiemaschine, insbesondere einer Gasturbine, mit einem Diffusoreintritt, mit einem Diffusoraustritt und mit einer Vielzahl an Luftleitelementen gelöst, bei welchem ein Luftmassenstrom durch den Diffusoreintritt hindurch in den Diffusor hinein gelangt, und bei welchem der in den Diffusor gelangte Luftmassenstrom durch den Diffusoraustritt wieder aus dem Diffusor hinaus gelangt und hierbei mittels der Luftleitelemente als eine Vielzahl an in Umfangsrichtung benachbarten Luftmassenpartialströmen abströmt, wobei wenigstens zwei unmittelbar benachbarte Luftleitelemente derart ausgestaltet sind, dass deren in Umfangsrichtung erfassbare Komponente einen Abströmwinkel αₙ bezogen auf die durch die in Umfangsrichtung umlaufende Austrittsöffnung des Diffusoraustritts ausgestaltete Umfangsfläche voneinander verschieden sind, wobei in Bezug auf die Umfangsfläche gewählte Neigungswinkel der Luftleitelemente in Abhängigkeit von ihrer jeweiligen Umfangslage an dem Diffusoraustritt gewählt sind und wobei die Abströmwinkel αₙ und/oder die Neigungswinkel der Luftleitelemente in Bezug auf eine durch eine Austrittsöffnung des Diffusoraustritts ausgestaltete Umfangsfläche umso kleiner sind, je weiter das jeweilige Luftleitelement von einer Mündungsöffnung eines Zuströmkanals angeordnet ist.

Jedem der Luftleitelemente wohnt durch seine Gestalt ein lokaler Abströmwinkel αₙ inne, mit welchem ein durch das jeweilige Luftleitelement erzeugter Luftmassenpartialstrom von diesem Luftleitelement abströmt. Jeder lokale Abströmwinkel ist in zwei unterschiedliche Komponenten (die wiederum Winkel sind) zerlegbar:
Eine erste Komponente, welche durch einen Längsschnitt durch den Diffusor entlang seiner Längsmittelachse erfassbar ist, gibt die Neigung der abströmenden Luft gegenüberüber der Längsmittelachse an: ob die Luft parallel zur Längsmittelachse ausströmt oder nach radial weiter außen bzw. innen geleitet wird.
Eine zweite Komponente des Abströmwinkels, welche durch einen senkrecht zur Längsmittelachse des Diffusors verlaufenden Schnitt erfassbar ist, gibt die Neigung der abströmenden Luft gegenüber der Umfangsrichtung an: ob die Luft parallel zur Umfangsrichtung des Diffusoraustritts (Maximaldrall) oder mit minder starkem Drall um die Längsmittelachse ausströmt. Dabei ist es unerheblich, ob der Drall im Uhrzeigersinn oder entgegengesetzt ist.

Diese zweite Komponente wird hier als in Umfangsrichtung erfassbare Komponente des Abströmwinkels bezeichnet und ist erfindungsgemäß unterschiedlich für zumindest zwei unmittelbar benachbarte Luftmassenpartialströme. Dies wird damit erreicht, dass die betreffenden Luftleitelemente dementsprechende ausgebildet sind: wenigstens zwei unmittelbar benachbarte Luftleitelemente der Vielzahl an Luftleitelementen sind derart ausgestaltet, dass deren in Umfangsrichtung erfassbare Komponente eines Abströmwinkel αₙ bezogen auf eine durch die Austrittsöffnung des Diffusoraustritts ausgestaltete Umfangsfläche voneinander verschieden sind.

Im Detail sind die Abströmwinkel sogar für unterschiedliche radiale Positionen des Diffusoraustritts ermittelbar. Wenn jedoch hier nun von unterschiedlichen Komponenten des Abströmwinkels benachbarter Luftleitelementen die Rede ist, so setzt dieser Vergleich voraus, dass die verglichenen Abströmwinkel der betreffenden Luftleitelemente auf gleichem Radius ermittelt werden. Der Radius ist dabei der radiale Abstand zwischen der Längsmittelachse des Diffusors und dem betreffenden Punkt der Hinterkante des Luftleitelements.

Bisher sind diese den Luftleitelementen innewohnende Abströmwinkel - bezogen auf die im Sinne der Erfindung formulierte Umfangsfläche - für alle Luftleitelemente gleich, so dass bisher die Luftmassenpartialströmen mit gleichem Drall abströmten, unabhängig davon, an welcher Umfangslage sie platziert waren. Insofern strömten die Luftmassenpartialströme bisher nur undifferenziert von dem Diffusor ab, so dass die meisten der Luftmassenpartialströme beispielsweise Mündungsöffnungen von Zuströmkanälen von Silo-Brennkammern uneffektiv zugeleitet wurden.

Speziell dieser Nachteil ist vorliegend behoben bzw. zumindest stark abgeschwächt.

Durch die Verwendung der Erfindung können an unterschiedlichen Umfangspositionen des Diffusoraustritts die jeweiligen Luftmassenpartialströme mit einem jeweils individuellen Drall dort lokal ausströmen, so dass die einzelnen Luftmassenpartialströme den Mündungsöffnungen von Zuströmkanälen von Silo-Brennkammern nun verlustärmer zugeleitet werden können. Beispielsweise können diejenigen Luftmassenpartialströme, die einen längeren Weg zur Mündungsöffnungen zurücklegen müssen, durch entsprechend ausgestaltete Luftleitelemente mit einem größeren Drall aus dem Diffusor ausströmen als diejenigen Luftmassenpartialströme, die einen kürzeren Weg zu den Mündungsöffnungen zurücklegen müssen. Dies verringert die Strömungsverluste zwischen dem Diffusoraustritt und dem Mündungsbereichen.

Die Anzahl an benachbarten Luftleitelementen mit unterschiedlichen in Umfangsrichtung erfassbaren Komponenten der Abströmwinkel kann vorliegend verschieden sein und hängt im Wesentlichen auch von dem Design des Diffusors oder dergleichen ab.

Insofern können auch nur ausgewählte Luftleitelemente im Sinne der Erfindung manipuliert werden, um die vorliegenden gewünschten Effekte erzielen zu können.

Die Vorzugsrichtungen der durch die Luftleitelemente erzeugten Luftmassenpartialströme können noch präziser und effektiver insbesondere an einem Diffusoraustrittsbereich abströmen, wenn in Bezug auf die Umfangsfläche gewählte Neigungswinkel der Luftleitelemente in Abhängigkeit von ihrer jeweiligen Umfangslage an dem Diffusoraustritt gewählt sind. Beispielsweise weisen von einer Mündungsöffnung eines Zuströmkanals weiter entfernt angeordnete Luftleitbleche bzw. Luftleitelemente einen anderen Neigungswinkel, insbesondere einen spitzeren Neigungswinkel, auf als ein näher an einem solchen Zuströmkanal angeordnetes Luftleitblech bzw. Luftleitelement.

Je nach Ausgestaltung der Erfindung kann es zweckmäßig sein, wenn Abströmwinkel αₙ und/oder Neigungswinkel der Luftleitelemente in Bezug auf eine durch eine Austrittsöffnung des Diffusoraustritts ausgestaltete Umfangsfläche umso kleiner sind, je weiter das jeweilige Luftleitelement von einer Mündungsöffnung eines Zuströmkanals von Silo-Brennkammern oder dergleichen entfernt angeordnet ist, da hierdurch die partiellen Abströmungen gezielter vorgegeben werden können.

Im Sinne der Erfindung beziehen sich die Abströmwinkel an auf die Umfangsfläche, welche durch die in Umfangsrichtung umlaufende Austrittsöffnung des Diffusoraustritts ausgestaltet ist.

Diese Umfangsfläche ist hierbei durch die gebogene und sich in Umfangsrichtung des Diffusors erstreckende Austrittsöffnung des Diffusoraustritts aufgespannt.

Der Begriff "thermische Energiemaschine" betrifft im Sinne der Erfindung im Wesentlichen eine Turbine und insbesondere eine Gasturbine. Insofern werden die Begriffe "thermische Energiemaschine" und "Turbine" vorliegend synonym verwendet.

Die zwei unmittelbar benachbarten Luftleitelemente sind hierbei in Umfangsrichtung des Diffusoraustritts direkt nebeneinander bevorzugt an dem Diffusoraustritt des Diffusors, oder alternativ unmittelbar hinter dem Diffusoraustritt in einem Diffusoraustrittsbereich einer thermischen Energiemaschine bzw. einer Turbine angeordnet.

Es versteht sich, dass die vorliegenden Luftleitelemente unterschiedlich ausgestaltet sein können. Beispielsweise weist ein Luftleitelement einen Blechkörper auf, welcher einen im Sinne der Erfindung vorteilhaften Abströmwinkel αₙ formuliert.

Ein solcher gewünschter Abströmwinkel αₙ kann konstruktiv besonders einfach beispielsweise durch einen am Diffusoraustritt geeignet gewählten Neigungswinkel des Blechkörpers bzw. des jeweiligen Luftleitelements erzielt werden. Hierbei können vorteilhafterweise gleich gestaltete bzw. identische Luftleitelemente verwendet werden, wodurch eine kostengünstige Herstellung erreicht werden kann.

Kumulativ oder alternativ können auch Luftleitelemente mit unterschiedlich geformten und gerichteten Luftleitflächen verwendet werden, um die vorliegenden Effekte erzielen oder verstärken zu können. Hierdurch verkompliziert sich jedoch die Herstellung und Montage der einzelnen unterschiedlichen Luftleitelemente.

Vorliegend kann die Anzahl der vorgesehenen Luftleitelemente nahezu beliebig gewählt werden, wobei die Abströmwinkel und/oder die Neigungswinkel der Luftleitelemente, insbesondere von wenigstens zwei unmittelbar benachbarten Luftleitelementen, in Abhängigkeit von der Anzahl der an dem Diffusoraustritt angeordneten Luftleitelemente gewählt sein können.

Beispielsweise sind 48 solcher Luftleitelemente an dem Umfang des Diffusoraustritts verteilt angeordnet.

Die vorliegenden Luftleitelemente sind in Umfangsrichtung des Diffusoraustritts nebeneinander und damit auch im Wesentlichen konzentrisch um eine Maschinenlängsmittelachse einer thermischen Energiemaschine bzw. eines Verdichters der thermischen Energiemaschine herum angeordnet.

An dieser Stelle sei noch erwähnt, dass die Begrifflichkeit "unmittelbar" im Sinne der Erfindung bezogen auf die Luftleitelemente, zwei direkt nebeneinander angeordnete Luftleitelemente beschreibt, zwischen welchen kein weiteres der Luftleitelemente angeordnet ist. Im Gegensatz hierzu beschreibt die Begrifflichkeit "mittelbar" vorliegend benachbarte Luftleitelementen, zwischen denen ein oder mehrere Luftleitelemente angeordnet sind.

Jedenfalls können die durch die Vielzahl an Luftleitelementen erzeugten Luftmassenpartialströme vorliegend mit unterschiedlichen Abströmwinkeln von dem Diffusoraustritt abströmen, wodurch alle erzeugten Luftmassenpartialströme vorteilhafter, insbesondere mit günstigeren Vorzugsrichtungen, etwa in Richtung von Zuströmkanäle von radial weiter außen angeordneten Silo-Brennkammern oder dergleichen, abströmen können.

Insbesondere sind die Abströmwinkel der Luftmassenpartialströme derart von den einzelnen Luftleitelementen vorgegeben, dass eine diesbezüglich direktere Anströmung der Zuströmkanäle erfolgt.

Insofern wird die Aufgabe der Erfindung auch von einer thermischen Energiemaschine, insbesondere einer Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern gelöst, bei welcher ein durch ein Gehäuse der thermischen Energiemaschine ausgestalteter Diffusoraustrittsbereich radial in zu den Silo-Brennkammern hin führenden Zuströmkanäle derart hinein mündet, dass der aus dem Diffusor austretende Luftmassenstrom mittels des Diffusoraustrittsbereichs in die Zuströmkanäle abströmen kann, wobei die thermische Energiemaschine sich durch den hier beschriebenen Diffusor auszeichnet, welcher nach einer der hier beschriebenen Merkmalskombination ausgestaltet sein kann.

Hierdurch kann der Diffusoraustritt an der thermischen Energiemaschine, insbesondere an der Gasturbine, derart ausgestaltet werden, dass insbesondere die Zuströmkanäle der Silo-Brennkammern direkter und definierter durch die Luftmassenpartialströme angeströmt werden können.

Eine durch den vorliegenden Diffusor ausgerüstete thermische Energiemaschine bzw. Turbine kann somit wesentlich effektiver betrieben werden.

Eine bevorzugte Ausführungsvariante sieht vor, dass zwei unmittelbar benachbarte Luftleitelemente mit unterschiedlichen Neigungswinkeln gegenüber der Umfangsfläche geneigt angeordnet sind.

Hierdurch können die jeweils durch die unterschiedlich gegenüber der Umfangsfläche geneigten Luftleitelemente erzeugten Luftmassenpartialströme individueller abströmen.

Gleiches gilt, wenn zwei unmittelbar benachbart zu einem gemeinsam benachbarten Luftleitelement angeordnete Luftleitelemente unterschiedlich stark geneigt gegenüber diesem gemeinsamen unmittelbar benachbarten Luftleitelement angeordnet sind.

Das gemeinsame Luftleitelement ist hierbei zwischen den beiden hierzu unmittelbar benachbarten Luftleitelementen angeordnet, wobei diese Luftleitelemente in Umfangsrichtung des Diffusoraustritts nebeneinander platziert sind.

Erzeugen die Luftleitelemente, insbesondere zwei unmittelbar benachbarte Luftleitelemente, relativ zu der Umfangsfläche, welche durch die im Wesentlichen konzentrisch um eine Maschinenlängsmittelachse des Diffusors herum verlaufende Austrittsöffnung des Diffusoraustritts aufgespannt ist, unterschiedliche Abströmwinkel, können die Abströmrichtungen der Luftmassenpartialströme individuell vorgegeben werden, um die im Sinne der Erfindung gewünschten Effekte zu erzielen.

Darüber hinaus ist es vorteilhaft, wenn Abströmwinkel αₙ und/oder Neigungswinkel von benachbarten Luftleitelementen, insbesondere von zwei unmittelbar benachbarten Luftleitelementen, in Abhängigkeit von einem von der letzten Verdichterstufe formulierten Strömungsaustrittswinkel des Luftmassenstroms eines stromauf angeordneten Verdichters gewählt sind.

Einer durch einen Restdrall des aus der letzten Verdichterstufe austretenden Luftmassenstroms gegebenenfalls entstehenden Verblockung des Luftmassenstroms innerhalb des Diffusors kann vorteilhaft dadurch entgegengewirkt werden, dass die Abströmwinkel αₙ und/oder Neigungswinkel der Luftleitelemente in Abhängigkeit von einem von der letzten Verdichterstufe formulierten Strömungsaustrittswinkel des Luftmassenstroms des vorgeschalteten Verdichters gewählt sind.

Im Idealfall können die sich gegenüberliegenden Luftleitelemente in Umfangsrichtung des Diffusoraustritts um 180° versetzt zueinander angeordnet sein. Gegebenenfalls können auch Schieflasten hinsichtlich zweier Silo-Brennkammereinrichtungen einer Gasturbine zur Gänze vermieden oder zumindest signifikant reduziert werden, wenn sich am Diffusoraustritt gegenüberliegende Luftleitelemente nicht den gleichen Abströmwinkel αₙ bzw. nicht den gleichen Neigungswinkel aufweisen.

Insofern ist es vorteilhaft, wenn sich am Diffusoraustritt gegenüberliegende Luftleitelemente voneinander verschiedene Abströmwinkel αₙ bzw. voneinander verschiedene Neigungswinkel aufweisen.

Durch eine individuelle Anpassung der Abströmwinkel αₙ bzw. der Neigungswinkel im Sinne der Erfindung kann eine Aufteilung des Luftmassenstroms präziser erfolgen und somit eine Homogenisierung der Verbrennung an den Silo-Brennkammereinrichtungen erreicht werden.

Jedenfalls können mit der vorliegenden Erfindung, die von dem Diffusoraustritt abströmenden Luftmassenpartialströme bereits quasi vorsortiert werden, so dass sie effektiver insbesondere einen Diffusoraustrittsbereich durchströmen können.

Weitere Merkmale, Effekte und Vorteile vorliegender Erfindung werden anhand anliegender Zeichnung und nachfolgender Beschreibung erläutert, in welchen beispielhaft ein Diffusor mit durch unterschiedlich gewählte Neigungswinkel ausgerichteten Luftleitelementen an einer als Turbine ausgestalteten thermischen Energiemaschine dargestellt und beschrieben ist.

In der Zeichnung zeigen:
- Figur 1: schematisch eine quer zu einer Turbinenlängsmittelachse geschnittene Querschnittsansicht eines Diffusors einer Turbine; und
- Figur 2: schematisch eine perspektivische Teilansicht eines Diffusorsegmentes des in der Figur 1 gezeigten Diffusors.

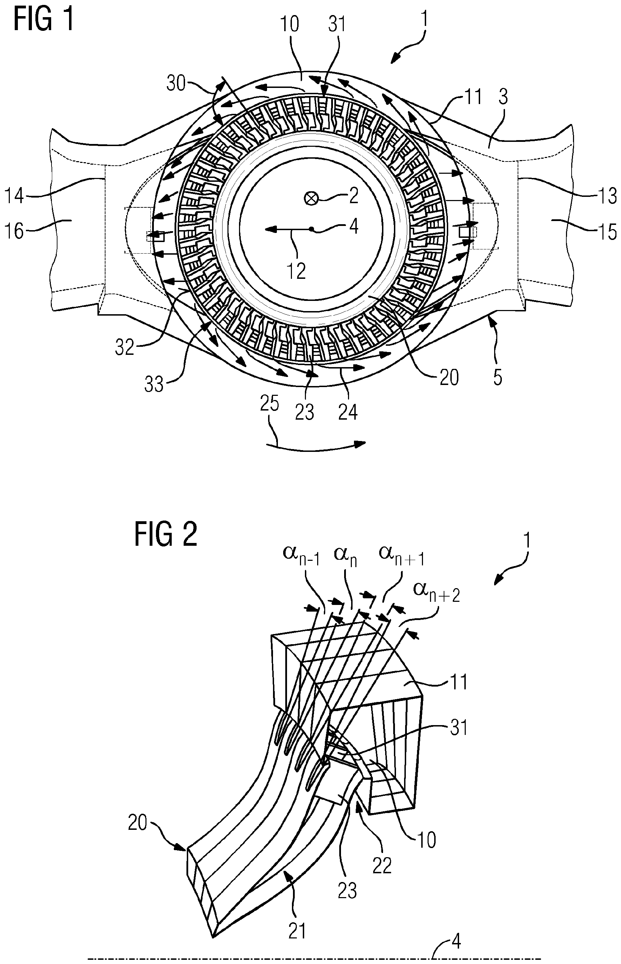

Der in den Figuren 1 und 2 zumindest teilweise gezeigte Diffusor 1 ist stromab, also in axialer Strömungsrichtung 2 gesehen hinter einem hier nicht gezeigten Verdichter einer thermischen Energiemaschine bzw. einer Turbine 3 angeordnet, wobei die axiale Strömungsrichtung 2 mit der Längsmittelachse 4 fluchtet.

Bei der Turbine 3 handelt es sich in diesem Ausführungsbeispiel um eine Gasturbine 5, wobei sich die Turbine 3 bzw. die Gasturbine 5 noch durch zwei radial weiter außen angeordnete und nicht dargestellte Silo-Brennkammereinrichtungen mit jeweils einer Silo-Brennkammer (nicht gezeigt) auszeichnet.

Hierbei ist ein stromab hinter dem Diffusor 1 ausgebildeter Diffusoraustrittsbereich 10 zumindest teilweise durch ein Gehäuse 11 der Turbine 3 ausgestaltet, wobei dieser Diffusoraustrittsbereich 10 seitlich und in Bezug auf seine Längsmittelachse 4 in radialer Richtung 12 (nur beispielhaft eingezeichnet) radial nach außen in jeweils eine Mündungsöffnung 13 bzw. 14 eines Zuströmkanals 15 bzw. 16 hinein mündet, welcher jeweils bis in die entsprechende Silo-Brennkammer führt.

Wie aus Figur 2 ersichtlich, handelt es sich bei dem hier gezeigten Diffusor um einen Diagonal-Ringdiffusor. Diagonal bedeutet dabei, dass die Hauptströmungsrichtung im Diffusor 1 in etwa 45° gegenüber einer Längsmittelachse 4 des Diffusors 1 beträgt. Ringdiffusor bedeutet dabei, dass der Diffusoraustrittsbereich 10 als Ringspalt ausgebildet ist, der die Längsmittelachse 4 des Diffusors 1 konzentrisch umgibt.

Wie insbesondere auch gemäß der Darstellung nach der Figur 2 gut ersichtlich ist, gelangt ein hier nicht weiter eingezeichneter, den Verdichter in axialer Strömungsrichtung 2 durchströmender Luftmassenstrom durch einen Diffusoreintritt 20 hindurch in den Diffusor 1, durchströmt einen sich aufweitenden Diffusorkanal 21 des Diffusors 1 und strömt anschließend weiter aus einen Diffusoraustritt 22 und dem Diffusoraustrittsbereich 10 zu den Mündungsöffnungen 13 und 14 ab, wobei der abströmende Luftmassenstrom im Bereich des Diffusoraustritts 22 mittels einer Vielzahl an Luftleitelementen 23 (hier nur exemplarisch beziffert) in eine entsprechende Vielzahl an Luftmassenpartialströmen 24 (nur exemplarisch beziffert, siehe Figur 1) aufgeteilt wird.

Die Vielzahl an Luftleitelementen 23 ist in Umfangsrichtung 25 des Diffusoraustritts 22 konzentrisch um die Turbinenlängsmittelachse 4 herum verteilt angeordnet.

Damit die einzelnen Luftmassenpartialströme 24 direkter und optimierter in Richtung der Mündungsöffnungen 13 und 14 abströmen können, sind zumindest einige der Luftleitelemente 23 und insbesondere jeweils zwei unmittelbar benachbarte Luftleitelemente 23 mit einem Neigungswinkel 30 (nur exemplarisch eingetragen) gegenüber einer durch die Austrittsöffnung 31 des Diffusoraustritts 22 aufgespannten Umfangsfläche 32 derart geneigt angeordnet, dass die einzelnen Luftmassenpartialströme 24 direkter und optimierter in Richtung der Mündungsöffnungen 13 und 14 abströmen können.

Kumulativ oder alternativ können Luftleitelemente 23 noch derart unterschiedlich ausgebildet sein, dass die einzelnen Luftmassenpartialströme 24 direkter und optimierter in Richtung der Mündungsöffnungen 13 und 14 oder noch effektiver abströmen können. So ist im gezeigten Ausführungsbeispiel gemäß Figur 1 erkennbar, dass diejenigen Luftmassenpartialströme 24, welche auf der 03:00 Uhr und 09:00 Uhr Position des Diffusors 1 ausströmen, dies nahezu drallfrei tun. Mit anderen Worten: Die Luftmassenpartialströme bzw. die diese lenkenden Luftleitelemente 23 weisen eine eher kleine bis gar keine in Umfangsrichtung erfassbare Komponente des Abströmwinkels auf. Im Unterschied dazu sind diejenigen Luftmassenpartialströme, welche auf der 12:00 Uhr und 06:00 Uhr Position des Diffusors ausströmen, mit größerem Drall versehen. Mithin weisen diese Luftmassenpartialströme bzw. die diese lenkenden Luftleitelemente 23 eine eher größere in Umfangsrichtung erfassbare Komponente des Abströmwinkels auf.

Mithin sind in den Übergangsbereichen, beispielsweise bei der 02:00 Uhr Position, zwei unmittelbar benachbart zu einem gemeinsam benachbarten Luftleitelement 23 angeordnete Luftleitelemente 23 unterschiedlich geneigt zu diesem gemeinsamen unmittelbar benachbarten Luftleitelement 23 angeordnet, so dass bevorzugt jedes der Luftleitelemente 23 in Bezug auf die Umfangsfläche 32 anders geneigt angeordnet ist.

Insofern können die Luftleitelemente 23 bezüglich der vorliegenden Umfangsfläche 32 unterschiedliche Abströmwinkel αₙ erzeugen.

Von einem der Luftleitelemente 23 wird also ein Abströmwinkel αₙ erzeugt, wobei von einem ersten unmittelbar benachbarten Luftleitelemente 23 ein hiervon verschiedener Abströmwinkel αₙ₊₁ und von einem weiteren unmittelbar benachbarten Luftleitelemente 23 ein hiervon verschiedener Abströmwinkel αₙ₋₁ erzeugt wird. Weiter wird von einem ersten mittelbar benachbarten Luftleitelemente 23 ein hiervon verschiedener Abströmwinkel αₙ₊₂ erzeugt usw.

Ferner sind die in Bezug auf die Umfangsfläche 32 gewählte Neigungswinkel 30 der Luftleitelemente 23 in Abhängigkeit von ihrer jeweiligen Umfangslage 33 an dem Diffusoraustritt 22 gewählt, wodurch die einzelnen Luftmassenpartialströme 24 noch zielgerichteter in Richtung der Mündungsöffnungen 13 und 14 abströmen.

Mittels des in der Turbine 2 integrierten und vorstehend beschriebenen Diffusors 1 können die von dem Diffusoraustritt 22 abströmenden Luftmassenpartialströme 24 hinsichtlich ihrer Strömungsrichtung bereits derart gut vorsortiert werden, dass sie effektiver zu den Mündungsöffnungen 13 bzw. 14 hin abströmen können.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Gasturbine (5) umfassend
- einen Verdichter zum Verdichten eines entlang der Maschinenlängsmittelachse (4) in axialer Strömungsrichtung (2) strömenden Luftmassenstroms und
- einen diesem Verdichter axial nachgeschalteten Diffusor (1), welcher (1) einen Diffusoreintritt (20) und eine Vielzahl an Luftleitelemente (23) und ein durch ein Gehäuse (11) ausgestalteter Diffusoraustrittsbereich (10) mit einem Diffusoraustritt (22) aufweist, wobei ein Luftmassenstrom durch den Diffusoreintritt (20) hindurch in den Diffusor (1) hinein und durch den Diffusoraustritt (22) wieder aus dem Diffusor (1) hinaus gelangt und hierbei mittels der Luftleitelemente (23) als eine Vielzahl an in Umfangsrichtung benachbarten Luftmassenpartialströmen (24) abströmt, weiterhin umfassend
- zwei sich gegenüberliegende radial weiter außen angeordnete Silo-Brennkammern und
- zwei gegenüberliegende radial zu den Silo-Brennkammern führende Zuströmkanäle (15, 16), wobei der aus dem Diffusor (1) austretende Luftmassenstrom mittels des Diffusoraustrittsbereichs (10) in die Zuströmkanäle (15, 16) abströmen kann,
**dadurch gekennzeichnet,**
**dass** wenigstens zwei unmittelbar benachbarte Luftleitelemente (23) der Vielzahl an Luftleitelementen (23) derart ausgestaltet sind, dass deren in Umfangsrichtung erfassbare Komponente eines Abströmwinkel αₙ bezogen auf eine durch die Austrittsöffnung (31) des Diffusoraustritts (22) ausgestaltete Umfangsfläche (32) voneinander verschieden sind, wobei in Bezug auf die Umfangsfläche (32) gewählte Neigungswinkel (30) der Luftleitelemente (23) in Abhängigkeit von ihrer jeweiligen Umfangslage (33) an dem Diffusoraustritt (22) gewählt sind und wobei die Abströmwinkel αₙ und/oder die Neigungswinkel (30) der Luftleitelemente (23) in Bezug auf eine durch eine Austrittsöffnung (31) des Diffusoraustritts (22) ausgestaltete Umfangsfläche (32) umso kleiner sind, je weiter das jeweilige Luftleitelement (23) von einer Mündungsöffnung (13, 14) des Zuströmkanals (15, 16) angeordnet ist.

2. Gasturbine (5) nach Anspruch 1,
wobei zwei unmittelbar benachbarte Luftleitelemente (23) mit unterschiedlichen in Umfangsrichtung erfassbaren Neigungswinkeln (30) gegenüber der Umfangsfläche (32) geneigt angeordnet sind.

3. Gasturbine (5) nach Anspruch 1 oder 2,
wobei zwei unmittelbar benachbart zu einem gemeinsam benachbarten Luftleitelement (23) angeordnete Luftleitelemente (23) unterschiedlich stark geneigt gegenüber diesem gemeinsamen unmittelbar benachbarten Luftleitelement (23) angeordnet sind.

4. Gasturbine (5) nach einem der Ansprüche 1 bis 3,
wobei Abströmwinkel αₙ und/oder Neigungswinkel (30) von benachbarten Luftleitelementen (23), insbesondere von zwei unmittelbar benachbarten Luftleitelementen (23), in Abhängigkeit von einem von der letzten Verdichterstufe formulierten Strömungsaustrittswinkel des Luftmassenstroms eines stromauf angeordneten Verdichters gewählt sind.

5. Gasturbine (5) nach einem der Ansprüche 1 bis 4,
wobei sich am Diffusoraustritt (22) gegenüberliegende Luftleitelemente (23) voneinander verschiedene Abströmwinkel αₙ bzw. voneinander verschiedene Neigungswinkel (30) aufweisen.

6. Gasturbine (5) nach einem der Ansprüche 1 bis 5,
wobei der Diffusor (1) als Diagonal-Ringdiffusor ausgestaltet ist.

## Claims

1. Gas turbine (5) comprising
- a compressor for compressing an air mass flow flowing in an axial flow direction (2) along the central longitudinal axis (4) of the machine, and
- a diffuser (1) connected axially downstream of this compressor, which diffuser (1) has a diffuser inlet (20) and a plurality of air guiding elements (23) and a diffuser outlet region (10), with a diffuser outlet (22), which is formed by a housing (11), wherein an air mass flow passes into the diffuser (1) through the diffuser inlet (20) and back out of the diffuser (1) through the diffuser outlet (22), and in so doing flows away, owing to the air guiding elements (23), as a plurality of air mass part flows (24) that are adjacent in the circumferential direction, also comprising
- two mutually opposite can-type combustion chambers that are arranged radially further out, and
- two opposite inflow ducts (15, 16) leading radially to the can-type combustion chambers, wherein the air mass flow leaving the diffuser (1) can flow away, owing to the diffuser outlet region (10), into the inflow ducts (15, 16),
**characterized**
**in that** at least two immediately adjacent air guiding elements (23) of the plurality of air guiding elements (23) are configured in such a way that they have mutually different components of an outflow angle αₙ, measurable in the circumferential direction, relative to a circumferential face (32) formed by the outlet opening (31) of the diffuser outlet (22), wherein the inclination angles (30) of the air guiding elements (23), chosen in relation to the circumferential face (32), are chosen in dependence on their respective circumferential position (33) at the diffuser outlet (22), and wherein the outflow angle αₙ and/or the inclination angle (30) of the air guiding elements (23) in relation to a circumferential face (32) formed by an outlet opening (31) of the diffuser outlet (22) are smaller the greater the distance between the respective air guiding element (23) and a mouth opening (13, 14) of the inflow duct (15, 16).

2. Gas turbine (5) according to Claim 1,
wherein two immediately adjacent air guiding elements (23) are inclined at different inclination angles (30), measurable in the circumferential direction, with respect to the circumferential face (32).

3. Gas turbine (5) according to Claim 1 or 2,
wherein two air guiding elements (23) arranged directly adjacent to a common adjacent air guiding element (23) are arranged with different degrees of inclination with respect to this common immediately adjacent air guiding element (23).

4. Gas turbine (5) according to one of Claims 1 to 3,
wherein the outflow angle αₙ and/or the inclination angle (30) of adjacent air guiding elements (23), in particular of two immediately adjacent air guiding elements (23), are chosen in dependence on a flow outlet angle, formulated by the last compressor stage, of the air mass flow of a compressor arranged upstream.

5. Gas turbine (5) according to one of Claims 1 to 4,
wherein air guiding elements (23) that are mutually opposite at the diffuser outlet (22) have mutually different outflow angles αₙ and/or mutually different inclination angles (30).

6. Gas turbine (5) according to one of Claims 1 to 5,
wherein the diffuser (1) is configured as a diagonal-annular diffuser.

## Revendications

1. Turbine (5) à gaz, comprenant
- un compresseur pour comprimer un courant massique d'air passant dans une direction (2) d'écoulement axial suivant l'axe (4) longitudinal médian de la machine et
- un diffuseur (1), qui est monté en aval axialement de ce compresseur et qui (1) a une entrée (20) de diffuseur et une pluralité d'éléments (23) de conduite d'air et une partie (10) de sortie de diffuseur, conformée par une enveloppe (11) et ayant une sortie (22) de diffuseur, dans laquelle un courant massique d'air pénètre dans le diffuseur (1) par l'entrée (20) du diffuseur et ressort du diffuseur (1) par la sortie (22) du diffuseur et, ainsi, sort, au moyen des éléments (23) de conduite d'air, sous la forme d'une pluralité de courants (24) partiels massiques d'air, voisins dans la direction du pourtour, comprenant, en outre
- deux chambre de combustion silo, disposées radialement en opposition plus loin vers l'extérieur et
- deux conduits (15, 16) d'afflux, radialement en opposition, menant aux chambres de combustion silo, le courant massique d'air sortant du diffuseur (11) pouvant, au moyen de la partie (10) de sortie du diffuseur, aller dans les conduits (15, 16) d'afflux,
**caractérisé**
**en ce qu'**au moins deux éléments (23) de conduite d'air, directement voisins, de la pluralité d'éléments (23) de conduite d'air sont conformés de manière à ce que leurs composantes, pouvant être prises dans la direction du pourtour, d'un angle αₙ d'écoulement, rapporté à une surface (32) de pourtour, conformée par l'ouverture (31) de la sortie (22) du diffuseur, sont différentes l'une de l'autre, dans lequel, rapporté à la surface (32) du pourtour, les angles (30) d'inclinaison choisis des éléments (23) de conduite d'air sont choisis en fonction de leur position (33) respective sur le pourtour, à la sortie (22) du diffuseur, et dans lequel les angles αₙ d'écoulement et/ou les angles (30) d'inclinaison des éléments (23) de conduite d'air sont, rapporté à une surface (32) de pourtour conformée par l'ouverture (31) de la sortie (22) du diffuseur, d'autant plus petits que l'élément (23) respectif de conduite d'air est disposé plus loin d'une ouverture (13, 14) d'embouchure du conduit (15, 16) d'afflux.

2. Turbine (5) à gaz suivant la revendication 1,
dans laquelle deux éléments (23) de conduite d'air directement voisins sont disposés en étant inclinés d'angles (30) d'inclinaison différents, pouvant être pris dans la direction du pourtour, par rapport à la surface (32) du pourtour.

3. Turbine (5) à gaz suivant la revendication 1 ou 2,
dans laquelle deux éléments (23) de conduite d'air, disposés en étant directement voisins par rapport à un élément (23) de conduite d'air voisin commun, sont disposés en étant inclinés très différemment par rapport à cet élément (23) de conduite d'air commun directement voisin.

4. Turbine (5) à gaz suivant l'une des revendications 1 à 3, dans laquelle des angles αₙ d'écoulement et/ou des angles (30) d'inclinaison d'éléments (23) de conduite d'air voisins, notamment de deux éléments (23) de conduite d'air directement voisins, sont choisis en fonction d'un angle de sortie d'écoulement, formulé par le dernier étage du compresseur, du courant massique d'air d'un compresseur en amont.

5. Turbine (5) à gaz suivant l'une des revendications 1 à 4, dans laquelle des éléments (23) de conduite d'air, se faisant face à la sortie (22) du diffuseur, ont des angles αₙ d'écoulement différents l'un de l'autre ou des angles (30) d'inclinaison différents l'un de l'autre.

6. Turbine (5) à gaz suivant l'une des revendications 1 à 5, dans laquelle le diffuseur (1) est conformé en diffuseur annulaire en diagonale.
